# FASCICULE DE BREVET EUROPEEN

(11) **EP 3 045 427 B1**
(45) Date de publication et mention de la délivrance du brevet: **29.12.2021**
(21) Numéro de dépôt: 16151019.3
(22) Date de dépôt: 13.01.2016
(51) Int. Cl.: C01D 7/18, C01D 7/37, B01D 53/60, B01D 53/50, B01D 53/56, B01D 53/68, C01C 1/28, B01D 53/02, B01J 20/04, B01J 20/02

(54) **COMPOSITE DE SELS DE SODIUM ET D'AMMONIUM POUR LA DÉPOLLUTION DES FUMÉES**
VERBUNDMISCHUNG AUS NATRIUM- UND AMMONIUMSALZEN ZUR RAUCHGASREINIGUNG
AMMONIUM OR SODIUM SALT COMPOSITE IN FUME DEPOLLUTION

(30) Priorité: 14.01.2015 FR 1550294
(43) Date de publication de la demande: 20.07.2016
(73) Titulaire: Novacarb, 54410 Laneuveville Devant Nancy (FR)
(72) Inventeur: GAULAY, Mickaël, 54000 NANCY (FR); JACOB, Dominique, 54210 SAINT NICOLAS DE PORT (FR); MOUZON, Sophie, 88350 LIFFOL LE GRAND (FR)
(74) Mandataire: Lavoix

(56) Documents cités:
- WO-A1-97/16236
- WO-A1-98/25693
- US-B1- 6 290 872
- None

## Description

L'invention concerne le domaine de la dépollution des fumées, en particulier des fumées issues d'installations de combustion industrielles, notamment des incinérateurs, et d'installations de chauffage, notamment des fours, par exemple des fours verriers. L'invention fournit un composite, cristallin ou composé cristallin, comprenant du bicarbonate de sodium (NaHCO₃), du carbonate de sodium (Na₂CO₃) et au moins un sel d'ammonium. comme dans la revendication 1.

L'invention fournit également un procédé de préparation de ce composite, cristallin comme dans la revendication 8 ainsi qu'un procédé de dépollution mettant en œuvre ce composite. comme dans les revendication 10 et 14.

De nombreux procédés produisent des fumées contenant des oxydes de soufre (SOₓ), des oxydes d'azote (NOₓ), des gaz acides tels que HX, X étant un halogène et plus particulièrement Cl, et d'autres polluants organiques ou minéraux considérés comme toxiques.

On connait notamment des unités de valorisation énergétique de l'incinération des déchets ménagers, hospitaliers ou industriels, des centrales thermiques ou encore des fours verriers qui produisent des fumées comprenant de tels polluants.

Du fait de la pression croissante exercée en matière de réglementation sur l'environnement concernant les installations émettant de tels rejets, les procédés de traitement des fumées acides connaissent un essor important.

Le traitement par voie sèche est généralement mis en œuvre pour réduire les émissions de gaz acides (HX tels que HCI et HF) et oxydes de soufre (SOₓ tels que SO₂ et SO₃) provenant de sources de combustion variées.

Il s'agit du traitement le plus utilisé et il est généralement mis en œuvre avec un réactif calcique comme la chaux ou un réactif sodique comme le bicarbonate de sodium ou le carbonate de sodium.

L'injection de carbonate de sodium ou de bicarbonate de sodium dans le flux gazeux permet la réaction avec les gaz acides à traiter. Le réactif peut être préalablement broyé, avant d'être directement injecté dans la gaine de fumées. Le broyage permet d'augmenter la surface de contact gaz-solide et ainsi, d'améliorer le rendement de la réaction.

Les unités de traitement des fumées par voie sèche doivent être suivies par un système de filtration (par exemple électrofiltre ou filtre à manches), avant le rejet des fumées dans l'atmosphère. Le système de filtration permet de collecter les produits résiduaires issus du traitement des fumées. WO98/25693 décrit un procédé pour le traitement des fumées utilisant un composite comprenant du bicarbonate et une source d'ammoniaque.

Le bicarbonate de sodium est connu pour ses propriétés de réaction avec les gaz acides tels que HX, dont HCI, et les oxydes de soufre (SOₓ)

Avec le dioxyde de soufre, la réaction générale de neutralisation par le bicarbonate de sodium s'écrit:

2 NaHCO₃ + SO₂ + ½ O₂ → Na₂SO₄ + H₂O + 2 CO₂

Cette réaction se produit en deux temps:
- décomposition du bicarbonate:

   2 NaHCO₃ → Na₂CO₃ + H₂O + CO₂
- réaction du carbonate de sodium avec le dioxyde de soufre:

   Na₂CO₃ + SO₂ + ½ O₂ → Na₂SO₄ + CO₂

Avec l'acide chlorhydrique, la réaction générale de neutralisation de HCI par le bicarbonate de sodium s'écrit:

NaHCO₃ + HCl → NaCl + H₂O + CO₂

Cette réaction se produit après décomposition thermique du bicarbonate en carbonate:

Na₂CO₃ + 2 HCl → NaCl + H₂O + CO₂

Toutefois, outre les gaz acides et les oxydes de soufre (SOₓ), les fumées à dépolluer comprennent également des oxydes d'azote (NOₓ).

Pour la transformation chimique des oxydes d'azote, il est connu d'injecter de l'ammoniac (NH₃) qui permet d'obtenir des produits de réaction tels la vapeur d'eau (H₂O) et l'azote élémentaire (N₂). Ces produits de réaction peuvent être rejetés dans l'atmosphère sans risque de pollution. Les réactions mises en jeu sont:

4 NO + 4 NH₃ + O₂ → 4 N₂+ 6 H₂O

2 NO₂ + 4 NH₃ + O₂ → 3 N₂+ 6 H₂O

Ces réactions chimiques associées peuvent être réalisées en présence d'un catalyseur ou, en l'absence de catalyseur, dans une plage de températures plus élevées. En présence d'un catalyseur, la température peut aller de 160 à 450 °C. Cette température peut être comprise entre 850 et 1 050 °C en l'absence de catalyseur. Les catalyseurs utilisés sont généralement à base de vanadium sur un support en titane, comme par exemple : V₂O₅,TiO₂.

Des réactions analogues se produisent lors de la dégradation d'oxydes d'azote en présence d'urée.

Les procédés de dépollution de fumées de l'état de la technique ne permettent donc pas de dégrader simultanément les gaz acides (HX), les oxydes de soufre (SOₓ) et les oxydes d'azote (NOₓ) présents dans les fumées.

De même, les procédés de dépollution de fumées de l'état de la technique ne permettent pas de dégrader au moyen d'un même réactif les gaz acides (HX), les oxydes de soufre (SOₓ) et les oxydes d'azote (NOₓ) présents dans les fumées.

Ainsi, il existe un besoin de disposer d'un procédé de dépollution amélioré permettant de traiter efficacement les fumées comprenant des gaz acides (HX), des oxydes de soufre (SOₓ) et des oxydes d'azote (NOₓ).

L'invention fournit donc un composite, cristallin, permettant d'apporter une solution à tout ou partie des problèmes des procédés de l'état de la technique pour la dépollution des fumées comprenant des gaz acides (HX), des oxydes de soufre (SOₓ) et des oxydes d'azote (NOₓ).

Ainsi, l'invention fournit un composite, cristallin, comprenant :
■ du bicarbonate de sodium (NaHCO₃),
■ du carbonate de sodium anhydre (Na₂CO₃) ou du carbonate de sodium sous forme hydratée (Na₂CO₃.nH₂O, n représentant un nombre allant de 1 à 10),
■ au moins un sel d'ammonium.

De manière préférée, le composite selon l'invention comprend du bicarbonate de sodium (NaHCO₃), du carbonate de sodium sous forme hydratée (Na₂CO₃.nH₂O) et au moins un sel d'ammonium.

De manière également préférée, le composite selon l'invention comprend au moins un sel d'ammonium choisi parmi le bicarbonate d'ammonium (NH₄HCO₃) et le carbamate d'ammonium (NH₄OCONH₂). De manière préférée, le sel d'ammonium est le bicarbonate d'ammonium (NH₄HCO₃).

De manière également préférée, le composite selon l'invention comprend également du bicarbonate de sodium hydraté de composition similaire à celle du sesquicarbonate dihydrate composé à partir de carbonate de sodium, de bicarbonate de sodium et d'eau de constitution, de formule Na₂CO₃.NaHCO₃.2H₂O. Le sesquicarbonate dihydrate est un composé analogue du trona, minéral naturel.

Le composite selon l'invention est cristallin. Il permet d'obtenir un spectre par diffraction de rayons X. Le composite selon l'invention se présente alors sous la forme d'un cristal unique formé des différents composés qui peuvent être issus du bicarbonate de sodium (NaHCO₃), du carbonate de sodium anhydre (Na₂CO₃) ou du carbonate de sodium hydraté (Na₂CO₃.nH₂O) et d'au moins un sel d'ammonium.

De manière préférée, l'invention fournit des exemples particuliers de composite selon l'invention. Ces exemples particuliers de composite selon l'invention se caractérisent par leur composition particulière qui permet de les distinguer les uns des autres. Leur composition particulière permet également de les distinguer des sels en tant que tels. Ces différents composites sont caractérisés par leur composition chimique ainsi que par leur empreinte cristallographique. Cette empreinte cristallographique particulière peut être caractérisée par diffraction de rayons X permettant d'obtenir des valeurs d'angle de Bragg (échelle 2θ) mesurés en degrés. Ces composites particuliers sont également caractérisés par leurs groupes d'espace et leurs paramètres de maille particuliers qui sont définis par les longueurs a, b et c et par les angles α (alpha), β (beta) et γ (gamma).

Ces paramètres sont caractéristiques des composites selon l'invention et permettent de les distinguer des mélanges simples des différentes espèces chimiques qu'ils peuvent comprendre. Ainsi, les différents composites selon l'invention peuvent se distinguer de mélanges simples par la détection de certaines espèces chimiques dans le mélange simple alors que ces espèces ne sont pas détectées dans le composite selon l'invention De manière analogue, certaines espèces chimiques peuvent être détectées dans le composite selon l'invention alors que ces espèces ne sont pas détectées dans le mélange simple.

Pour le composite selon l'invention, le bicarbonate de sodium est préférentiellement du groupe d'espace P21/n n°14, le carbonate de sodium est préférentiellement du groupe d'espace C2/m n°12, le bicarbonate de sodium hydraté est préférentiellement du groupe d'espace 12/a n°15, le bicarbonate d'ammonium est préférentiellement du groupe d'espace Pccn n°56 et le carbamate d'ammonium est préférentiellement du groupe d'espace Pbca n°61 (pour la forme a) ou du groupe d'espace Ibam n°72 (pour la forme β).

Des exemples particuliers de composite selon l'invention sont préférentiellement choisis parmi
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium hydraté responsable des pics de diffraction de rayons X majoritairement entre 30 et 60 degrés en angle de Bragg (échelle 2θ) du composite de l'invention et
   ■ du bicarbonate d'ammonium responsable des pics de diffraction de rayons X majoritairement entre 14 et 45 degrés en angle de Bragg (échelle 20) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium hydraté responsable des pics de diffraction de rayons X majoritairement entre 30 et 60 degrés en angle de Bragg (échelle 2θ) du composite de l'invention,
   ■ du bicarbonate d'ammonium responsable des pics de diffraction de rayons X majoritairement entre 14 et 45 degrés en angle de Bragg (échelle 2θ) du composite de l'invention et
   ■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium hydraté responsable des pics de diffraction de rayons X majoritairement entre 30 et 60 degrés en angle de Bragg (échelle 2θ) du composite de l'invention et
   ■ du carbamate d'ammonium responsable des pics de diffraction de rayons X majoritairement entre 20 et 55 degrés en angle de Bragg (échelle 2θ) du composite de l'invention ;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium hydraté responsable des pics de diffraction de rayons X majoritairement entre 30 et 60 degrés en angle de Bragg (échelle 2θ) du composite de l'invention,
   ■ du carbamate d'ammonium responsable des pics de diffraction de rayons X majoritairement entre 20 et 55 degrés en angle de Bragg (échelle 2θ) du composite de l'invention et
   ■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium anhydre responsable des pics de diffraction de rayons X majoritairement entre 30 et 60 degrés en angle de Bragg (échelle 2θ) du composite de l'invention et
   ■ du bicarbonate d'ammonium responsable des pics de diffraction de rayons X majoritairement entre 14 et 45 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium anhydre responsable des pics de diffraction de rayons X majoritairement entre 30 et 60 degrés en angle de Bragg (échelle 2θ) du composite de l'invention,
   ■ du bicarbonate d'ammonium responsable des pics de diffraction de rayons X majoritairement entre 14 et 45 degrés en angle de Bragg (échelle 2θ) du composite de l'invention et
   ■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention ;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium anhydre responsable des pics de diffraction de rayons X majoritairement entre 30 et 60 degrés en angle de Bragg (échelle 2θ) du composite de l'invention et
   ■ du carbamate d'ammonium responsable des pics de diffraction de rayons X majoritairement entre 20 et 55 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium anhydre responsable des pics de diffraction de rayons X majoritairement entre 30 et 60 degrés en angle de Bragg (échelle 2θ) du composite de l'invention,
   ■ du carbamate d'ammonium responsable des pics de diffraction de rayons X majoritairement entre 20 et 55 degrés en angle de Bragg (échelle 2θ) du composite de l'invention et
   ■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention.
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium hydraté responsable des pics de diffraction de rayons X majoritairement entre 30 et 60 degrés en angle de Bragg (échelle 2θ) du composite de l'invention,
   ■ du bicarbonate d'ammonium responsable des pics de diffraction de rayons X majoritairement entre 14 et 45 degrés en angle de Bragg (échelle 2θ) du composite de l'invention, et
   ■ du carbamate d'ammonium responsable des pics de diffraction de rayons X majoritairement entre 20 et 55 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium hydraté responsable des pics de diffraction de rayons X majoritairement entre 30 et 60 degrés en angle de Bragg (échelle 2θ) du composite de l'invention,
   ■ du bicarbonate d'ammonium responsable des pics de diffraction de rayons X majoritairement entre 14 et 45 degrés en angle de Bragg (échelle 2θ) du composite de l'invention,
   ■ du carbamate d'ammonium responsable des pics de diffraction de rayons X majoritairement entre 20 et 55 degrés en angle de Bragg (échelle 2θ) du composite de l'invention et
   ■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium anhydre responsable des pics de diffraction de rayons X majoritairement entre 30 et 60 degrés en angle de Bragg (échelle 2θ) du composite de l'invention,
   ■ du bicarbonate d'ammonium responsable des pics de diffraction de rayons X majoritairement entre 14 et 45 degrés en angle de Bragg (échelle 2θ) du composite de l'invention, et
   ■ du carbamate d'ammonium responsable des pics de diffraction de rayons X majoritairement entre 20 et 55 degrés en angle de Bragg (échelle 2θ) du composite de l'invention;
o un composite comprenant :
   ■ du bicarbonate de sodium responsable des pics de diffraction de rayons X majoritairement entre 25 et 65 degrés en angle de Bragg (échelle 2θ) du composite de l'invention,
   ■ du carbonate de sodium anhydre responsable des pics de diffraction de rayons X majoritairement entre 30 et 60 degrés en angle de Bragg (échelle 2θ) du composite de l'invention,
   ■ du bicarbonate d'ammonium responsable des pics de diffraction de rayons X majoritairement entre 14 et 45 degrés en angle de Bragg (échelle 2θ) du composite de l'invention,
   ■ du carbamate d'ammonium responsable des pics de diffraction de rayons X majoritairement entre 20 et 55 degrés en angle de Bragg (échelle 2θ) et
   ■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention.

Un composite préféré selon l'invention comprend:
■ du bicarbonate de sodium responsable des pics de diffraction de rayons X majoritairement entre 25 et 65 degrés en angle de Bragg (échelle 2θ) du composite de l'invention,
■ du carbonate de sodium sous forme hydratée responsable des pics de diffraction de rayons X majoritairement entre 30 et 60 degrés en angle de Bragg (échelle 2θ) du composite de l'invention,
■ du bicarbonate d'ammonium responsable des pics de diffraction de rayons X majoritairement entre 14 et 45 degrés en angle de Bragg (échelle 2θ) du composite de l'invention.

Un composite particulièrement préféré selon l'invention comprend:
■ du bicarbonate de sodium responsable des pics de diffraction de rayons X majoritairement entre 25 et 65 degrés en angle de Bragg (échelle 2θ) du composite de l'invention,
■ du carbonate de sodium sous forme hydratée responsable des pics de diffraction de rayons X majoritairement entre 30 et 60 degrés en angle de Bragg (échelle 2θ) du composite de l'invention,
■ du bicarbonate d'ammonium responsable des pics de diffraction de rayons X majoritairement entre 14 et 45 degrés en angle de Bragg (échelle 2θ) du composite de l'invention et
■ du bicarbonate de sodium hydraté de type sesquicarbonate dihydrate responsable des pics de diffraction de rayons X majoritairement entre 20 et 70 degrés en angle de Bragg (échelle 2θ) du composite de l'invention.

De préférence, la présente invention concerne un composite comprenant:
■ du bicarbonate de sodium,
■ du carbonate de sodium sous forme hydratée,
■ du bicarbonate d'ammonium, et
■ du bicarbonate de sodium hydraté de type sesquicarbonate dihydrate,
ledit composite présentant un diagramme de diffraction de rayon X comprenant des pics entre 25 et 65 degrés en angle de Bragg (échelle 2θ) relatif au bicarbonate de sodium ; des pics entre 30 et 60 degrés en angle de Bragg (échelle 2θ) relatif au carbonate de sodium sous forme hydratée, de pics entre 14 et 45 degrés en angle de Bragg (échelle 2θ) relatif au bicarbonate d'ammonium, et des pics entre 20 et 70 degrés en angle de Bragg (échelle 2θ) relatif au bicarbonate de sodium hydraté de type sesquicarbonate dihydrate.

Pour ce composite préféré selon l'invention, le bicarbonate de sodium hydraté de type sesquicarbonate dihydrate peut être détecté alors qu'il ne l'est pas dans un mélange simple. De préférence, dans le cadre de l'invention le mélange simple correspond notamment à un mélange comprenant 70-90% en poids de bicarbonate de sodium, 0.1-15% de carbonate de sodium et 0.5-5% de bicarbonate d'ammonium. Le spectre de diffraction de rayons X de l'espèce bicarbonate d'ammonium est identifiable en totalité dans le mélange alors qu'il ne l'est pas dans le composite selon l'invention. De même, le carbonate de sodium de type natrite n'est pas détecté de manière significative pour ce composite préféré selon l'invention alors qu'il est détecté dans un mélange simple.

La structure cristalline de ce composite préféré selon l'invention présente le plus d'analogies avec la structure cristalline du bicarbonate de sodium. Par analyse de ce composite par diffraction de rayons X, on constate que les pics caractéristiques du bicarbonate de sodium définissent un groupe d'espace qui est le même que celui du bicarbonate pur alors que ses paramètres de maille sont différents au sein du composite comparés à ceux du bicarbonate de sodium pur. La valeur de la longueur de maille a est de 7,48 Å pour le composite alors qu'elle est de 7,548 Å pour le bicarbonate de sodium pur. De même, la valeur de l'angle β est 93,0 ° pour le composite selon l'invention alors qu'elle est de 93,4 ° pour le bicarbonate de sodium pur. De plus, les pics de diffraction de rayons X du bicarbonate de sodium au sein du composite selon l'invention sont plus larges que les pics du bicarbonate de sodium pur.

Comme exemple de composite préféré, on peut citer un composite selon l'invention produisant des pics de diffraction de rayons X entre 25 et 65 degrés en angle de Bragg (échelle 2θ), entre 30 et 60 degrés en angle de Bragg (échelle 2θ) et entre 14 et 45 degrés en angle de Bragg (échelle 2θ) et comprenant :
■ du bicarbonate de sodium,
■ du carbonate de sodium hydraté et
■ du bicarbonate d'ammonium.

Comme exemple de composite préféré, on peut citer un composite selon l'invention présentant des pics de diffraction de rayons X entre 25 et 65 degrés en angle de Bragg (échelle 2θ), entre 30 et 60 degrés en angle de Bragg (échelle 2θ) et entre 14 et 45 degrés en angle de Bragg (échelle 2θ) et comprenant :
■ du bicarbonate de sodium,
■ du carbonate de sodium hydraté et
■ du bicarbonate d'ammonium.

Comme exemple de composite particulièrement préféré, on peut citer un composite selon l'invention produisant des pics de diffraction de rayons X entre 25 et 65 degrés en angle de Bragg (échelle 2θ), entre 30 et 60 degrés en angle de Bragg (échelle 2θ), entre 14 et 45 degrés en angle de Bragg (échelle 2θ) et entre 20 et 70 degrés en angle de Bragg (échelle 2θ) et comprenant :
■ du bicarbonate de sodium,
■ du carbonate de sodium hydraté,
■ du bicarbonate d'ammonium et
■ du bicarbonate de sodium hydraté de type sesquicarbonate dihydrate.

Comme exemple de composite particulièrement préféré, on peut citer un composite selon l'invention présentant des pics de diffraction de rayons X entre 25 et 65 degrés en angle de Bragg (échelle 2θ), entre 30 et 60 degrés en angle de Bragg (échelle 2θ), entre 14 et 45 degrés en angle de Bragg (échelle 2θ) et entre 20 et 70 degrés en angle de Bragg (échelle 2θ) et comprenant :
■ du bicarbonate de sodium,
■ du carbonate de sodium hydraté,
■ du bicarbonate d'ammonium et
■ du bicarbonate de sodium hydraté de type sesquicarbonate dihydrate.

Le composite selon l'invention possède une composition qui peut varier de manière relativement importante. Le composite selon l'invention présente la composition ionique suivante :
■ de 50 à 65 % en poids d'ion bicarbonate,
■ de 2 à 9 % en poids d'ion carbonate,
■ de 0,5 à 5 % en poids d'équivalent d'ammoniac issu d'ion ammonium.

Outre ces ions, le composite selon l'invention comprend du sodium, en particulier du sodium associé aux ions carbonate et bicarbonate Les ions bicarbonates peuvent également être sous la forme de sel d'ammonium.

De manière également préférée, le composite selon l'invention comprend
■ de 70 à 90 % en poids de bicarbonate de sodium,
■ de 0,1 à 15 % en poids de carbonate de sodium,
■ de 0,5 à 5 % en poids de bicarbonate d'ammonium.

De manière avantageuse, le composite selon l'invention est sous forme de particules. Ces particules peuvent avoir une taille allant de 20 à 150 µm, de préférence allant de 50 à 120 µm. De manière plus préférée, l'invention fournit un composite sous la forme de particules de taille allant de 60 à 100 µm.

De manière avantageuse, les particules de composite selon l'invention ont une masse volumique allant de 700 à 990 kg/m³, de préférence de 800 à 950 kg/m³. De manière plus préférée, l'invention fournit un composite sous la forme de particules ayant une masse volumique allant de 850 à 920 kg/m³.

De manière très avantageuse, les particules de composite selon l'invention ont une taille allant de 20 à 150 µm et une masse volumique allant de 700 à 990 kg/m³.

De manière particulièrement préférée, les particules de composite selon l'invention ont une taille allant de 50 à 120 µm et une masse volumique allant de 800 à 950 kg/m³.

De manière tout particulièrement préférée, les particules de composite selon l'invention ont une taille allant de 60 à 100 µm et une masse volumique allant de 850 à 920 kg/m³.
La figure 1 représente un spectre de diffraction de rayons X d'un composite selon l'invention.
La figure 2 représente le spectre de diffraction de rayons X d'un simple mélange physique de bicarbonate de sodium (85 % en masse), de carbonate de sodium (10 % en masse) et de bicarbonate d'ammonium (5 % en masse).
La figure 3 représente l'évolution de la teneur en Na₂CO₃ dans le composite selon la température de traitement thermique et le temps de séjour.

Le composite selon l'invention peut donc posséder une structure et une composition particulière. Ces compositions et structures particulières peuvent être obtenues en contrôlant les conditions de préparation du composite selon l'invention.

L'invention fournit donc également un composite défini par son procédé de préparation. Un tel composite selon l'invention peut être obtenu selon un procédé continu comprenant
■ la dissolution d'ammoniac gazeux dans une solution aqueuse de chlorure de sodium ; puis
■ le traitement de la saumure ammoniacale obtenue par du dioxyde de carbone conduisant à un composite intermédiaire comprenant du bicarbonate de sodium et un sel d'ammonium ; puis
■ le traitement thermique du composite intermédiaire par chauffage à une température allant de 20 à 130 °C ou à une température allant de 50 à 110 °C et durant un temps de séjour allant de 5 à 30 min, de préférence de 10 à 20 min, en présence de dioxyde de carbone ou en présence de dioxyde de carbone et d'eau, à une pression partielle de dioxyde de carbone allant de 5 à 15 % molaire.

Le composite intermédiaire peut également comprendre du carbamate d'ammonium formé lors traitement de la saumure ammoniacale par le dioxyde de carbone.

De manière préférée, pour le composite intermédiaire selon l'invention, le sel d'ammonium est choisi parmi le bicarbonate d'ammonium et le carbamate d'ammonium ou leurs mélanges dont les proportions peuvent varier.

De manière également préférée, le composite selon l'invention est préparé selon un procédé au cours duquel le traitement thermique du composite intermédiaire est réalisé par chauffage à une température allant de 50 à 110 °C et durant un temps de séjour allant de 10 à 20 min.

De manière également préférée, le composite selon l'invention est préparé selon un procédé comprenant le traitement thermique du composite intermédiaire en présence de dioxyde de carbone en une quantité allant de 1 à 100 % molaire, en particulier allant de 1 à 10 % molaire, par rapport à la quantité de composite intermédiaire.

L'invention fournit donc également un procédé de préparation d'un composite selon l'invention. De manière préférée, le procédé de préparation selon l'invention est continu et comprend :
■ la dissolution d'ammoniac gazeux dans une solution aqueuse de chlorure de sodium ; puis
■ le traitement de la saumure ammoniacale obtenue par du dioxyde de carbone conduisant à un composite intermédiaire comprenant du bicarbonate de sodium et un sel d'ammonium, de préférence choisi parmi le bicarbonate d'ammonium et le carbamate d'ammonium; puis
■ le traitement thermique du composite intermédiaire par chauffage à une température allant de 20 à 130 °C ou à une température allant de 50 à 110 °C et durant un temps de séjour allant de 5 à 30 min, de préférence de 10 à 20 min, en présence de dioxyde de carbone ou en présence de dioxyde de carbone et d'eau, à une pression partielle de dioxyde de carbone allant de 5 à 15 % molaire.

De manière plus préférée, le procédé selon l'invention comprend un traitement thermique du composite intermédiaire qui est réalisé par chauffage à une température allant de 50 à 110 °C et durant un temps de séjour allant de 10 à 20 min.

De manière également préférée, le procédé selon l'invention comprend le traitement thermique du composite intermédiaire en présence de dioxyde de carbone en une quantité allant de 1 à 100 % molaire, en particulier allant de 1 à 10 % molaire, par rapport à la quantité de composite intermédiaire.

Le procédé selon l'invention permet d'éliminer tout ou partie de l'eau présente ainsi que de former le composite selon l'invention.

Outre le composite selon l'invention et un procédé de préparation, l'invention concerne également l'utilisation du composite selon l'invention pour le traitement ou la dépollution de fumées. De manière préférée, cette utilisation du composite selon l'invention est mise en œuvre pour le traitement ou la dépollution de fumées acides issues de procédé de combustion, notamment de combustion de déchets. Ces fumées comprennent généralement
■ des oxydes d'azote (NOₓ) ; ou
■ des oxydes d'azote (NOₓ) et des oxydes de soufre (SOₓ); ou
■ des oxydes d'azote (NOₓ) et au moins un acide halogéné (HX); ou
■ des oxydes d'azote (NOₓ), des oxydes de soufre (SOₓ) et au moins un acide halogéné (HX).

Les oxydes de soufre (SOₓ) comprennent généralement des oxydes de soufre en équilibre, en particulier SO₂ et SO₃. Généralement, l'acide halogéné (HX) est majoritairement l'acide chlorhydrique.

L'invention fournit donc un composite cristallin permettant de dégrader simultanément, totalement ou partiellement, les gaz acides (HX), les oxydes de soufre (SOₓ) et les oxydes d'azote (NOₓ) présents dans les fumées sans nécessité l'ajout d'autres réactifs.

L'invention fournit également un procédé de traitement ou de dépollution d'une telle fumée. Le procédé de traitement ou de dépollution selon l'invention comprend la mise en contact de cette fumée avec au moins un composite selon l'invention. De manière générale, le procédé de traitement ou de dépollution selon l'invention est mis en œuvre à une température supérieure à 150 °C.

De manière préférée, le procédé de traitement ou de dépollution selon l'invention met en œuvre un composite selon l'invention en un rapport molaire entre le composite et les oxydes de soufre (SOₓ) qui est compris en 1,02 et 2 fois le rapport stœchiométrique de la réaction mise en jeu.

De manière également préférée, le procédé de traitement ou de dépollution selon l'invention met en œuvre un composite selon l'invention en un rapport molaire entre le composite et l'acide halogéné (HX) qui est compris en 1,02 et 2 fois le rapport stœchiométrique de la réaction mise en jeu.

De manière particulièrement préférée, le procédé de traitement ou de dépollution selon l'invention met en œuvre un composite selon l'invention en un rapport molaire entre le composite et les oxydes de soufre (SOₓ) qui est compris en 1,02 et 2 fois le rapport stœchiométrique de la réaction mise en jeu et en un rapport molaire entre le composite et l'acide halogéné (HX) qui est compris en 1,02 et 2 fois le rapport stœchiométrique de la réaction mise en jeu.

Le rapport molaire entre le composite et les oxydes de soufre (SOₓ) et le rapport molaire entre le composite et l'acide halogéné (HX) peuvent également être stœchiométriques. L'un de ces rapports molaires peut également être stœchiométrique et l'autre être compris en 1,02 et 2 fois le rapport stœchiométrique.

Un rapport molaire des quantités de composite et d'oxydes de soufre (SOₓ) ou d'acide halogéné (HX) supérieur à 2 fois le rapport stœchiométrique est également possible mais ne permet généralement pas d'améliorer le rendement ou l'efficacité du procédé de traitement ou de dépollution selon l'invention.

L'invention fournit également un procédé de traitement ou de dépollution d'une telle fumée. Le procédé de traitement ou de dépollution selon l'invention comprend une étape consistant en la mise en contact de cette fumée avec un composite selon l'invention. De préférence, le procédé de traitement ou de dépollution selon l'invention consiste en la mise en contact de cette fumée avec un composite selon l'invention De manière générale, le procédé de traitement ou de dépollution selon l'invention est mis en œuvre à une température supérieure à 150 °C.

De manière préférée, le procédé de traitement ou de dépollution selon l'invention met en œuvre un composite selon l'invention en un rapport molaire entre le composite et les oxydes de soufre (SOₓ) qui est compris en 1,02 et 2 fois le rapport stœchiométrique de la réaction mise en jeu.

De manière également préférée, le procédé de traitement ou de dépollution selon l'invention met en œuvre un composite selon l'invention en un rapport molaire entre le composite et l'acide halogéné (HX) qui est compris en 1,02 et 2 fois le rapport stœchiométrique de la réaction mise en jeu.

De manière particulièrement préférée, le procédé de traitement ou de dépollution selon l'invention met en œuvre un composite selon l'invention en un rapport molaire entre le composite et les oxydes de soufre (SOₓ) qui est compris en 1,02 et 2 fois le rapport stœchiométrique de la réaction mise en jeu et en un rapport molaire entre le composite et l'acide halogéné (HX) qui est compris en 1,02 et 2 fois le rapport stœchiométrique de la réaction mise en jeu.

Le rapport molaire entre le composite et les oxydes de soufre (SOₓ) et le rapport molaire entre le composite et l'acide halogéné (HX) peuvent également être stœchiométriques. L'un de ces rapports molaires peut également être stœchiométrique et l'autre être compris en 1,02 et 2 fois le rapport stœchiométrique.

Un rapport molaire des quantités de composite et d'oxydes de soufre (SOₓ) ou d'acide halogéné (HX) supérieur à 2 fois le rapport stœchiométrique est également possible mais ne permet généralement pas d'améliorer le rendement ou l'efficacité du procédé de traitement ou de dépollution selon l'invention.

De manière avantageuse, le procédé de traitement ou de dépollution d'une fumée selon l'invention inclut également un procédé de réduction sélective catalytique des oxydes d'azote (NOₓ). Il s'agit de préférence d'un procédé de réduction sélective catalytique des oxydes d'azote (NOₓ) mis en œuvre à une température allant de 180°C à 380°C, en particulier à une température allant de 250 à 380°C ou à une température allant de 180 à 250 °C.

De manière également avantageuse, le procédé de traitement ou de dépollution d'une fumée selon l'invention inclut un procédé de réduction sélective non-catalytique des oxydes d'azote (NOₓ). Il s'agit de préférence d'un procédé de réduction sélective non-catalytique des oxydes d'azote (NOₓ) mis en œuvre à une température allant de 850 à 1 050 °C.

De manière préférée, le procédé de traitement ou de dépollution d'une fumée comprenant des oxydes d'azote (NOₓ) selon l'invention comprend une étape consistant à la mise en contact de la fumée avec un composite selon l'invention. De préférence, le procédé de traitement ou de dépollution d'une fumée comprenant des oxydes d'azote (NOₓ) selon l'invention consiste en la mise en contact de la fumée avec un composite selon l'invention. II permet la décomposition totale ou partielle des NOₓ par les réactions principales suivantes :

4NO+4NH₃+O₂ → 4 N₂+ 6 H₂O

2 NO₂ + 4 NH₃ + O₂ → 3 N₂+ 6 H₂O

L'apport d'ammoniac (NH₃) se fait au moyen du composite selon l'invention. Le composite soumis à une température supérieure à 100°C (préférentiellement supérieure à 140°C) se décompose partiellement en ammoniac gazeux. Cet ammoniac gazeux réagit avec les oxydes d'azote selon les mêmes réactions. Ainsi, et de manière avantageuse, le composite selon l'invention peut permettre à lui seul, sans ajout de réactifs complémentaires.

Selon les quantités d'oxyde d'azote à traiter, il est possible d'apporter un complément de réactif par injection d'urée ou d'ammoniac dans le flux de fumée à traiter. L'utilisation d'un composite selon l'invention permet alors de réduire les quantités en ammoniac ou en urée ajoutées. Ainsi, le procédé de traitement ou de dépollution d'une fumée selon l'invention peut inclure également un procédé de réduction sélective catalytique des oxydes d'azote (NOₓ) en présence d'urée ou d'ammoniac. Il s'agit de préférence d'un procédé de réduction sélective catalytique des oxydes d'azote (NOₓ) mis en œuvre à une température allant de 180 °C à 380 °C, en particulier à une température allant de 250 à 380 °C ou à une température allant de 180 à 250 °C. Le procédé de traitement ou de dépollution d'une fumée selon l'invention peut également inclure un procédé de réduction sélective non-catalytique des oxydes d'azote (NOₓ) en présence d'urée ou d'ammoniac. Il s'agit de préférence d'un procédé de réduction sélective non-catalytique des oxydes d'azote (NOₓ) mis en œuvre à une température allant de 850 à 1 050 °C.

Les différents aspects de l'invention vont faire l'objet des exemples qui suivent et qui sont fournis à titre d'illustration.

### Exemple 1 : préparation d'un composite (1) selon l'invention

On prépare un composite intermédiaire par réaction de saumure ammoniacale avec du dioxyde de carbone selon un procédé continu basé sur la technique de la soude à l'ammoniaque. On filtre. Puis, on traite ce composite intermédiaire au moyen d'un sécheur de type lit fluide. La vitesse de fluidisation est fixe. Le débit d'entrée dans le lit fluide est fixe. Le temps de séjour peut varier de 12 à 17 min et la température de 80 à 85 °C. À une température de 85 °C et pour un temps de séjour de 13 min, on obtient un composite selon l'invention qui comprend 11 % en poids de carbonate de sodium.

### Exemple 2 : préparation d'un composite (2) selon l'invention

De manière analogue, on prépare un composite intermédiaire par réaction de saumure ammoniacale avec du dioxyde de carbone. On filtre. Puis, on traite ce composite intermédiaire au moyen d'un sécheur de type lit fluide. La vitesse de fluidisation est fixe.

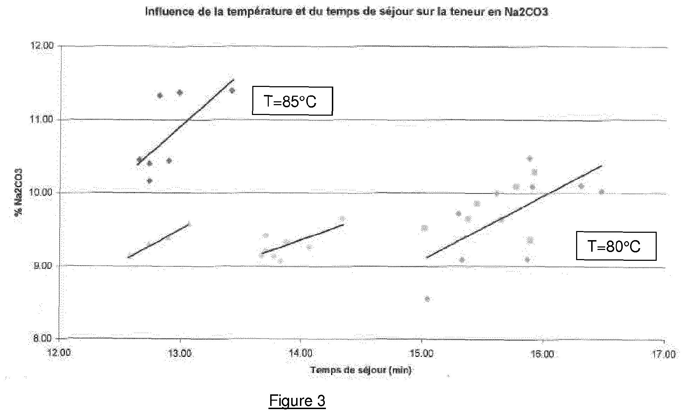

Le débit d'entrée dans le lit fluide est fixe. Le temps de séjour peut varier de 12 à 17 min et la température de 80 à 85 °C. Pour une température de 80 °C et un temps de séjour allant jusqu'à 16 min, on obtient un composite selon l'invention qui comprend 10% en poids de carbonate de sodium (figure 3).

### Exemple 3 : cartographie élémentaire O et Na d'un composite selon l'invention

Un composite (2) selon l'invention est préparé selon le procédé de l'exemple 2. Il a pour composition ionique: 85 % en masse de bicarbonate de sodium, 10 % en masse de carbonate de sodium et 1 % en masse d'équivalent ammoniac.

Ce composite (2) est caractérisé par microscopie électronique à balayage afin de réaliser une cartographie élémentaire en oxygène (O) et sodium (Na). Les cartographies en éléments Na et O indiquent une répartition homogène de ces éléments sur les particules du composite selon l'invention confirmant la différence entre ce composite selon l'invention et un mélange simple d'espèces chimiques.

Par comparaison, un mélange simple de particules d'espèces chimiques uniques conduit aux compositions massiques en sodium (Na) et oxygène (O) suivantes :
- particule de bicarbonate d'ammonium : Na : 0 % et O :61 %,
- particule de bicarbonate de sodium : Na : 27 % et O : 57%,
- particule de carbonate de sodium : Na : 43 % et O : 45 %.

Ainsi, contrairement au composite selon l'invention, un tel mélange de ces espèces conduit à une répartition non homogène du sodium et de l'oxygène sur l'ensemble des particules.

### Exemple 4 : caractérisation par diffraction de rayons X d'un composite selon l'invention

Un composite (2) selon l'invention est préparé selon le procédé de l'exemple 2. Il a pour composition ionique: 85 % en masse de bicarbonate de sodium, 10 % en masse de carbonate de sodium et 1 % en masse d'équivalent ammoniac. Ce composite (2) est caractérisé par diffraction de rayons X.

Dans le cas d'un matériau cristallisé, l'arrangement des atomes qui le composent présente une périodicité dans les 3 directions de l'espace. Cette répartition périodique permet de représenter le positionnement de ces atomes à l'aide de figures géométriques : les mailles. Chaque cristal est caractérisé par les paramètres de maille : longueurs et angles. La loi de Bragg relie la longueur d'onde λ du rayonnement X utilisé, la distance inter-réticulaire d entre les plans parallèles du cristal et l'angle d'incidence θ entre le rayonnement X et les plans considérés : λ = 2d.sinθ.

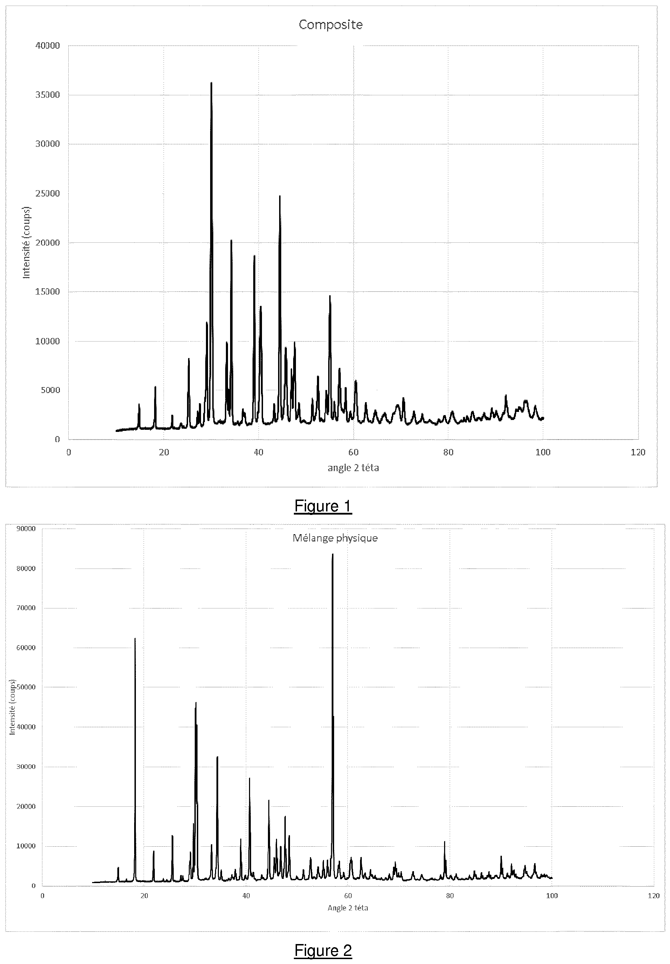

Le spectre de diffraction de rayons X du composite (2) selon l'invention est représenté par la figure 1. Les positions des pics indiquent la présence majoritaire de bicarbonate de sodium de même groupe d'espace que celui du bicarbonate de sodium pur, mais dont les paramètres de maille sont différents. Il y a une variation significative de la valeur du paramètre a du bicarbonate de sodium dans le composite. Il passe de 7,48 Angström à 7,548 Angström. Sur la figure 1, les positions des pics indiquent la présence majoritaire de bicarbonate de sodium de même groupe d'espace que celui du bicarbonate de sodium pur, mais les paramètres de maille sont différents. Il y a une variation significative de la valeur du paramètre a du bicarbonate de sodium dans le composite (2) selon l'invention, passant de 7,48 Angström à 7,548 Angström, alors que l'angle beta passe lui de 93,4° à 93,0°.

Ce spectre de diffraction de rayons X confirme également la présence de bicarbonate de sodium de type sesquicarbonate dihydrate (Na₂CO₃.NaHCO₃.2H₂O) dans le composite selon l'invention.

Concernant les profils des pics par rapport à un mélange simple, tout particulièrement pour les pics relatifs au bicarbonate de sodium HNaCO₃, les profils sont plus larges pour le composite selon l'invention. Cet élargissement traduit un gradient de paramètres de maille dans la structure du HNaCO₃ du composite selon l'invention.

De manière analogue, l'angle beta passe de 93,4° à 93,0 ° dans le composite selon l'invention.

La figure 2 représente le spectre de diffraction de rayons X d'un simple mélange physique de bicarbonate de sodium (85 % en masse), de carbonate de sodium (10 % en masse) et de bicarbonate d'ammonium (5 % en masse). Ce spectre de diffraction de rayons X confirme également que le bicarbonate de sodium de type sesquicarbonate dihydrate (Na₂CO₃.NaHCO₃.2H₂O) n'est pas présent dans ce simple mélange physique.

Concernant les profils des pics, tout particulièrement pour les pics relatifs au bicarbonate de sodium HNaCO₃, ils sont moins larges pour ce simple mélange physique par rapport aux pics du composite selon l'invention.

De manière analogue, l'angle beta est de 93,0 ° pour ce simple mélange physique alors qu'il est de 93,4° pour le composite selon l'invention.

L'ensemble de ces différences caractérisent donc le composite selon l'invention par rapport à un simple mélange physique.

### Exemple 5 : évaluation des performances d'un composite selon l'invention pour la dépollution de fumées d'incinération d'une centrale thermique à charbon

Un composite (2) selon l'invention préparé selon l'exemple 2 est utilisé au cours d'un traitement de fumées d'incinération d'une centrale thermique au charbon.

La chaudière est une chaudière multitubulaire de type Riley RX37 de marque Seum. Elle a une puissance de 50 MW. Elle n'est pas équipée de système de traitement des oxydes d'azote de type catalytique, ni de de système de traitement des oxydes d'azote non catalytique.

Lors du traitement, le débit de fumées est de 70 000 Nm³/h.

Au début du traitement, la concentration en polluants SOₓ est de 1 450 mg/Nm³ et la concentration en polluants NOₓ est de 600 mg/Nm³.

L'injection du composite est réalisée en amont du dépoussiéreur de type électro-filtre. Le traitement des composés de type HX, SOₓ et NOₓ est réalisé à 300°C. De l'air est injecté à une vitesse de 24 m/s pour le transport du composite. La variation du débit d'injection au cours du traitement permet un rapport molaire compris entre 1,6 et 2 fois le rapport stœchiométrique pour le traitement des composés SOₓ.

Au cours de l'essai, l'évolution des quantités de polluants de type SO₂ et NO₂ a été mesurée. L'analyse est faite par analyse en sortie des fumées de la cheminée de l'installation au moyen d'un analyseur multi-cellules de marque Sick série S710.

Le suivi des polluants SO₂ et NO₂ en sortie de cheminée indique que le composite réagit avec les oxydes de soufre SOₓ avec une élimination de 80 % des polluants de type SOₓ. Le composite réagit également avec les oxydes d'azote NOₓ. La mise en œuvre du composite permet de réduire la teneur en NO de 30 % environ.

### Exemple 6 : évaluation des performances d'un composite selon l'invention pour la dépollution de fumées d'incinération d'un incinérateur de déchets ménagers

L'incinérateur de déchets ménagers, d'une capacité d'incinération de 10 T/h, est équipé d'un système catalytique de traitement des oxydes d'azote avec ajout d'ammoniac en solution à une température de 235 °C. Le débit des fumées est de 45 000 Nm³/h.

A 180 °C et en l'absence de traitement, les émissions moyennes à la sortie de la cheminée sont présentées dans le tableau 1.

**Tableau 1**

| Polluants | |
|---|---|
| SOₓ (mg/Nm³) | 300 |
| HCI (mg/Nm³) | 700 |
| NOₓ (mg/Nm³) | 200 à 250 |

L'injection du composite (2) selon l'invention est réalisée en amont du dépoussiéreur de type filtre à manches. Le traitement des composés de type HX et SOₓ se fait à 180 °C. Le rapport molaire est compris entre 1,01 et 1,5 fois le rapport stœchiométrique pour le traitement des composés HX et SOₓ.

Au cours du traitement, les quantités de polluants de type HCI, SO₂ et NO₂ ont été mesurées. L'analyse est réalisée par analyse en sortie de fumées de la cheminée de l'installation au moyen d'un analyseur multi-cellules de marque Sick série S710. Les résultats sont présentés dans le tableau 2.

**Tableau 2**

| Réactifs | Bicarbonate de sodium à 100 % | Composite (2) selon l'invention |
|---|---|---|
| Durée (mois) | 8 | 3 |
| Déchets incinérés (OM) (T) | 103 671 | 23 050 |
| Réactif injecté (R) (T) | 1 043 | 215 |
| Ratio R/OM (Kg/T) | 10,1 | 9,3 |
| Consommation en ammoniac (NH₄) (T) | 195 | 37 |
| Ratio NH₄/OM (Kg/T) | 1,9 | 1,6 |
| SOₓ émis (mg/Nm³) | 2 | 2 |
| HCI émis (mg/Nm³) | 7 | 7 |
| NOₓ émis (mg/Nm³) | 65 | 65 |

On constate une réduction de 7 % du ratio R/OM lors du traitement au moyen du composite (2) selon l'invention par rapport au traitement au moyen d'un mélange simple comprenant du bicarbonate de sodium. On constate également une réduction de 16 % du ratio NH₄/OM lors du traitement au moyen du composite (2) selon l'invention par rapport au traitement au moyen d'un mélange simple comprenant du bicarbonate de sodium.

Le composite selon l'invention est donc plus efficace que le réactif unique comprenant du bicarbonate de sodium à 100% pour la dépollution de fumées d'incinération d'un incinérateur de déchets ménagers.

## Revendications

1. Composite cristallin comprenant
■ du bicarbonate de sodium (NaHCO₃),
■ du carbonate de sodium anhydre (Na₂COₛ) ou du carbonate de sodium sous forme hydratée (Na2CO₃.nH₂O),
■ au moins un sel d'ammonium,
**caractérisé en ce que** le composite comprend
o de 50 à 65 % en poids d'ion bicarbonate,
o de 2 à 9 % en poids d'ion carbonate,
o de 0,5 à 5 % en poids d'équivalent d'ammoniac issu d'ion ammonium.

2. Composite cristallin selon la revendication 1 comprenant également du bicarbonate de sodium hydraté de type sesquicarbonate dihydrate (NaHCO₃ - Na₂CO₃, 2H₂O).

3. Composite cristallin selon l'une des revendications 1 ou 2 dont le sel d'ammonium est choisi parmi le bicarbonate d'ammonium (NH₄HCO₃) et le carbamate d'ammonium (NH₄OC(O)NH₂).

4. Composite cristallin selon l'une des revendications 1 à 3 comprenant :
■ du bicarbonate de sodium,
■ du carbonate de sodium sous forme hydratée,
■ du bicarbonate d'ammonium, et
■ du bicarbonate de sodium hydraté de type sesquicarbonate dihydrate,
ledit composite présentant un diagramme de diffraction de rayon X comprenant des pics entre 25 et 65 degrés en angle de Bragg (échelle 2θ) relatif au bicarbonate de sodium ; des pics entre 30 et 60 degrés en angle de Bragg (échelle 2θ) relatif au carbonate de sodium sous forme hydratée, de pics entre 14 et 45 degrés en angle de Bragg (échelle 2θ) relatif au bicarbonate d'ammonium, et des pics entre 20 et 70 degrés en angle de Bragg (échelle 2θ) relatif au bicarbonate de sodium hydraté de type sesquicarbonate dihydrate.

5. Composite cristallin selon l'une des revendications 1 à 3 présentant des pics de diffraction de rayons X entre 25 et 65 degrés en angle de Bragg (échelle 2θ), entre 30 et 60 degrés en angle de Bragg (échelle 2θ) et entre 14 et 45 degrés en angle de Bragg (échelle 2θ) et comprenant :
■ du bicarbonate de sodium,
■ du carbonate de sodium hydraté et
■ du bicarbonate d'ammonium.

6. Composite cristallin selon l'une des revendications 1 à 5 sous forme de particules
o dont la taille va de 20 à 150 µm, de préférence de 50 à 120 µm, de préférence de 60 à 100 µm ; et/ou
o dont la masse volumique va de 700 à 990 kg/m³, de préférence de 800 à 950 kg/m³, de préférence de 850 à 920 kg/m³.

7. Composite cristallin selon l'une des revendications 1 à 6 obtenu selon le procédé continu comprenant
■ la dissolution d'ammoniac gazeux dans une solution aqueuse de chlorure de sodium ; puis
■ le traitement de la saumure ammoniacale obtenue par du dioxyde de carbone conduisant à un composite intermédiaire comprenant du bicarbonate de sodium et un sel d'ammonium ; puis
■ le traitement thermique du composite intermédiaire par chauffage à une température allant de 20 à 130 °C, de préférence à une température allant de 50 à 110 °C et durant un temps de séjour allant de 5 à 30 min, de préférence de 10 à 20 min, en présence de dioxyde de carbone ou en présence de dioxyde de carbone et d'eau, à une pression partielle de dioxyde de carbone allant de 5 à 15 % molaire.

8. Procédé de préparation d'un composite selon l'une des revendications 1 à 6, comprenant :
■ la dissolution d'ammoniac gazeux dans une solution aqueuse de chlorure de sodium ; puis
■ le traitement de la saumure ammoniacale obtenue par du dioxyde de carbone conduisant à un composite intermédiaire comprenant du bicarbonate de sodium et un sel d'ammonium ; puis
■ le traitement thermique du composite intermédiaire par chauffage à une température allant de 20 à 130 °C, de préférence à une température allant de 50 à 110 °C et durant un temps de séjour allant de 5 à 30 min, de préférence de 10 à 20 min, en présence de dioxyde de carbone ou en présence de dioxyde de carbone et d'eau, à une pression partielle de dioxyde de carbone allant de 5 à 15 % molaire.

9. Utilisation d'un composite cristallin selon l'une des revendications 1 à 7 pour le traitement ou la dépollution de fumées, de préférence de fumées acides issues de procédé de combustion, notamment de fumées comprenant
■ des oxydes d'azote (NOₓ) ; ou
■ des oxydes d'azote (NOₓ) et des oxydes de soufre (SOₓ) ; ou
■ des oxydes d'azote (NOₓ) et au moins un acide halogéné (HX) ; ou
■ des oxydes d'azote (NOₓ), des oxydes de soufre (SOₓ) et au moins un acide halogéné (HX).

10. Procédé de traitement ou de dépollution d'une fumée définie selon la revendication 9 comprenant la mise en contact de cette fumée avec au moins un composite cristallin selon l'une des revendications 1 à 7.

11. Procédé selon la revendication 10 pour lequel
■ le rapport molaire entre le composite et les oxydes de soufre (SOₓ) est stœchiométrique ou est compris entre 1,02 et 2 fois le rapport stœchiométrique de la réaction ; ou
■ le rapport molaire entre le composite et l'acide halogéné (HX) est stœchiométrique ou est compris entre 1,02 et 2 fois le rapport stœchiométrique de la réaction ; ou
■ le rapport molaire entre le composite et les oxydes de soufre (SOₓ) est stœchiométrique et le rapport molaire entre le composite et l'acide halogéné (HX) est stœchiométrique ; ou
■ le rapport molaire entre le composite et les oxydes de soufre (SOₓ) est stœchiométrique et le rapport molaire entre le composite et l'acide halogéné (HX) est compris en 1,02 et 2 fois le rapport stœchiométrique de la réaction ; ou
■ le rapport molaire entre le composite et les oxydes de soufre (SOₓ) est compris en 1,02 et 2 fois le rapport stœchiométrique de la réaction et le rapport molaire entre le composite et l'acide halogéné (HX) est compris en 1,02 et 2 fois le rapport stœchiométrique de la réaction ; ou
■ le rapport molaire entre le composite et les oxydes de soufre (SOₓ) est compris en 1,02 et 2 fois le rapport stœchiométrique de la réaction et le rapport molaire entre le composite et l'acide halogéné (HX) est stœchiométrique.

12. Procédé selon l'une des revendications 10 ou 11 pour le traitement la dépollution d'une fumée incluant un procédé de réduction sélective catalytique des oxydes d'azote (NOₓ) à une température allant de 180 °C à 380 °C ou à une température allant de 250 à 380 °C ou à une température allant de 180 à 250 °C.

13. Procédé selon l'une des revendications 10 ou 11 pour le traitement la dépollution d'une fumée incluant un procédé de réduction sélective non-catalytique des oxydes d'azote (NOₓ) à une température allant de 850 à 1 050 °C.

14. Procédé de traitement ou de dépollution d'une fumée comprenant des oxydes d'azote (NOₓ), comprenant une étape consistant en la mise en contact de la fumée avec au moins un composite selon l'une des revendications 1 à 7.

## Patentansprüche

1. Kristalliner Verbundstoff, umfassend
■ Natriumbicarbonat (NaHCO₃),
■ anhydrisches Natriumcarbonat (Na₂CO₃) oder Natriumcarbonat in hydratisierter Form (Na2CO₃.nH₂O),
■ mindestens ein Ammoniumsalz,
**dadurch gekennzeichnet, dass** der Verbundstoff Folgendes umfasst
° 50 bis 65 Gewichtsprozent Bicarbonationen,
° 2 bis 9 Gewichtsprozent Karbonationen,
° 0,5 bis 5 Gewichtsprozent Ammoniakäquivalent aus Ammoniumionen.

2. Kristalliner Verbundstoff nach Anspruch 1, ferner umfassend hydratisiertes Natriumbicarbonat vom Typ Sesquicarbonatdihydrat (NaHCO₃ - Na₂CO₃, 2H₂O).

3. Kristalliner Verbundstoff nach einem der Ansprüche 1 oder 2, wobei das Ammoniumsalz ausgewählt ist aus Ammoniumbicarbonat (NH₄HCO₃) und Ammoniumcarbamat (NH₄OC(O)NH₂).

4. Kristalliner Verbundstoff nach einem der Ansprüche 1 bis 3, umfassend:
■ Natriumbicarbonat,
■ Natriumcarbonat in hydratisierter Form,
■ Ammoniumbicarbonat, und
■ hydratisiertes Natriumbicarbonat vom Typ Sesquicarbonatdihydrat,
wobei der Verbundstoff ein Röntgenbeugungsmuster aufweist, umfassend Peaks zwischen 25 und 65 Grad Bragg-Winkel (2θ Skala), bezogen auf Natriumbicarbonat; Peaks zwischen 30 und 60 Grad Bragg-Winkel (2θ Skala), bezogen auf Natriumcarbonat in hydratisierter Form, Peaks zwischen 14 und 45 Grad Bragg-Winkel (2θ Skala), bezogen auf Ammoniumbicarbonat, und Peaks zwischen 20 und 70 Grad Bragg-Winkel (2θ Skala), bezogen auf Natriumbicarbonatdihydrat.

5. Kristalliner Verbundstoff nach einem der Ansprüche 1 bis 3, der Röntgenbeugungs-Peaks zwischen 25 und 65 Grad Bragg-Winkel (2θ Skala), zwischen 30 und 60 Grad Bragg-Winkel (2θ Skala) und zwischen 14 und 45 Grad Bragg-Winkel (2θ Skala) aufweist, und umfassend:
■ Natriumbicarbonat,
■ hydratisiertes Natriumcarbonat, und
■ Ammoniumbicarbonat.

6. Kristalliner Verbundstoff nach einem der Ansprüche 1 bis 5 in Form von Partikeln,
o deren Größe in einem Bereich von 20 bis 150 pm, vorzugsweise von 50 bis 120 pm, vorzugsweise von 60 bis 100 pm ist; und/oder
o dessen Dichte in einem Bereich von 700 bis 990 kg/m³, vorzugsweise von 800 bis 950 kg/m³, vorzugsweise von 850 bis 920 kg/m³ ist.

7. Kristalliner Verbundwerkstoff nach einem der Ansprüche 1 bis 6, erlangt durch das kontinuierliche Verfahren, umfassend
■ das Lösen von Ammoniakgas in einer wässrigen Natriumchloridlösung; anschließend
■ die Behandlung der erlangten Ammoniak-Sole mit Kohlendioxid, was zu einem Zwischenprodukt führt, umfassend Natriumbicarbonat und ein Ammoniumsalz; anschließend
■ die Wärmebehandlung des Zwischenprodukts durch Erwärmen auf eine Temperatur von 20-130°C, vorzugsweise auf eine Temperatur von 50-110°C und über eine Verweilzeit von 5-30 Minuten, vorzugsweise 10-20 Minuten, in Anwesenheit von Kohlendioxid oder in Anwesenheit von Kohlendioxid und Wasser, bei einem Kohlendioxid-Partialdruck von 5-15 Mol-%.

8. Verfahren zur Herstellung eines Verbundstoffs nach einem der Ansprüche 1 bis 6, umfassend:
■ das Lösen von Ammoniakgas in einer wässrigen Natriumchloridlösung; anschließend
■ die Behandlung der erlangten Ammoniak-Sole mit Kohlendioxid, was zu einem Zwischenprodukt führt, umfassend Natriumbicarbonat und ein Ammoniumsalz; anschließend
■ die Wärmebehandlung des Zwischenprodukts durch Erwärmen auf eine Temperatur von 20-130°C, vorzugsweise auf eine Temperatur von 50-110°C und über eine Verweilzeit von 5-30 Minuten, vorzugsweise 10-20 Minuten, in Anwesenheit von Kohlendioxid oder in Anwesenheit von Kohlendioxid und Wasser, bei einem Kohlendioxid-Partialdruck von 5-15 Mol-%.

9. Verwendung eines kristallinen Verbundstoffs nach einem der Ansprüche 1 bis 7 für die Behandlung oder Reinigung von Rauchgasen, vorzugsweise sauren Rauchgasen aus Verbrennungsprozessen, insbesondere von Rauchgasen, umfassend
■ Stickstoffoxide (NOₓ); oder
■ Stickoxide (NOₓ) und Schwefeloxide (SOₓ); oder
■ Stickstoffoxide (NOₓ) und mindestens eine halogenierte Säure (HX); oder
■ Stickoxide (NOₓ), Schwefeloxide (SOₓ) und mindestens eine halogenierte Säure (HX).

10. Verfahren zur Behandlung oder Reinigung eines definierten Rauchgases nach Anspruch 9, umfassend das Inkontaktbringen dieses Rauchgases mit mindestens einem kristallinen Verbundstoff nach einem der Ansprüche 1 bis 7.

11. Verfahren gemäß Anspruch 10, wobei
■ das Molverhältnis von Verbundstoff zu Schwefeloxiden (SOₓ) stöchiometrisch ist oder zwischen dem 1,02- und 2-fachen des stöchiometrischen Verhältnisses der Reaktion liegt; oder
■ das Molverhältnis zwischen dem Verbundstoff und der halogenierten Säure (HX) stöchiometrisch ist oder zwischen dem 1,02- und 2-fachen des stöchiometrischen Verhältnisses der Reaktion liegt; oder
■ das Molverhältnis zwischen dem Verbundstoff und den Schwefeloxiden (SOₓ) stöchiometrisch ist und das Molverhältnis zwischen Verbundstoff und halogenierter Säure (HX) stöchiometrisch ist; oder
■ das Molverhältnis zwischen dem Verbundstoff und den Schwefeloxiden (SOₓ) stöchiometrisch ist und das Molverhältnis zwischen dem Verbundstoff und der halogenierten Säure (HX) zwischen dem 1,02- und 2-fachen des stöchiometrischen Verhältnisses der Reaktion liegt; oder
■ das Molverhältnis zwischen dem Verbundstoff und den Schwefeloxiden (SOₓ) zwischen dem 1,02- und 2-fachen des stöchiometrischen Verhältnisses der Reaktion liegt und das Molverhältnis zwischen dem Verbundstoff und der halogenierten Säure (HX) zwischen dem 1,02- und 2-fachen des stöchiometrischen Verhältnisses der Reaktion liegt; oder
■ das Molverhältnis zwischen dem Verbundstoff und den Schwefeloxiden (SOₓ) zwischen dem 1,02- und 2-fachen des stöchiometrischen Verhältnisses der Reaktion liegt und das Molverhältnis zwischen dem Verbundstoff und der halogenierten Säure (HX) stöchiometrisch ist.

12. Verfahren nach einem der Ansprüche 10 oder 11 für die Behandlung der Reinigung eines Rauchgases einschließlich eines selektiven katalytischen Reduktionsverfahrens für Stickoxide (NOₓ) bei einer Temperatur in einem Bereich von 180 bis 380°C oder bei einer Temperatur in einem Bereich von 250 bis 380°C oder bei einer Temperatur in einem Bereich von 180 bis 250°C.

13. Verfahren nach einem der Ansprüche 10 oder 11 für die Behandlung der Reinigung eines Rauchgases einschließlich eines selektiven nichtkatalytischen Reduktionsverfahrens für Stickoxide (NOₓ) bei einer Temperatur von 850 bis 1050°C.

14. Verfahren zur Behandlung oder Reinigung eines Rauchgases, umfassend Stickoxide (NOₓ), umfassend einen Schritt, der aus einem Inkontaktbringen dieses Rauchgases mit mindestens einem kristallinen Verbundstoff nach einem der Ansprüche 1 bis 7 besteht.

## Claims

1. A crystalline composite comprising
■ sodium bicarbonate (NaHCO₃),
■ anhydrous sodium carbonate (Na₂CO₃) or sodium carbonate in hydrated form (Na2CO₃.nH₂O),
■ at least one ammonium salt,
**characterised in that** the composite comprises
o 50 to 65% by weight of bicarbonate ion,
o 2 to 9% by weight of carbonate ion,
o 0.5 to 5% by weight of ammonia equivalent from ammonium ion.

2. The crystalline composite of claim 1, further comprising hydrated sodium bicarbonate of the sesquicarbonate dihydrate type (NaHCO₃ - Na₂CO₃, 2H₂O).

3. The crystalline composite according to any one of claims 1 or 2 in which the ammonium salt is selected from ammonium bicarbonate (NH₄HCO₃) and ammonium carbamate (NH₄OC(O)NH₂).

4. The crystalline composite according to any one of claims 1 to 3, comprising:
■ sodium bicarbonate,
■ sodium carbonate in hydrated form,
■ ammonium bicarbonate, and
■ hydrated sodium bicarbonate of the sesquicarbonate dihydrate type,
said composite having an X-ray diffraction pattern comprising peaks between 25 and 65 degrees Bragg angle (scale 2-theta) relating to sodium bicarbonate; peaks between 30 and 60 degrees Bragg angle (scale 2-theta) relating to sodium carbonate in hydrated form, peaks between 14 and 45 degrees Bragg angle (scale 2-theta) relating to ammonium bicarbonate, and peaks between 20 and 70 degrees Bragg angle (scale 2-theta) relating to hydrated sodium bicarbonate of the sesquicarbonate dihydrate type.

5. The crystalline composite according to any one of claims 1 to 3 having X-ray diffraction peaks between 25 and 65 degrees Bragg angle (scale 2-theta), between 30 and 60 degrees Bragg angle (scale 2-theta) and between 14 and 45 degrees Bragg angle (scale 2-theta) and comprising:
■ sodium bicarbonate,
■ hydrated sodium carbonate and
■ ammonium bicarbonate.

6. The crystalline composite according to any one of claims 1 to 5 in particulate form
o whose size ranges from 20 to 150 pm, preferably from 50 to 120 pm, more preferably from 60 to 100 pm; and/or
o whose density ranges from 700 to 990 kg/m³, preferably from 800 to 950 kg/m³, more preferably from 850 to 920 kg/m³.

7. The crystalline composite according to any one of claims 1 to 6 obtained by the continuous process comprising
■ dissolving ammonia gas in an aqueous solution of sodium chloride; then
■ treating the resulting ammonia brine with carbon dioxide to produce an intermediate composite comprising sodium bicarbonate and an ammonium salt; and then
■ heat treatment of the intermediate composite by heating to a temperature of 20-130°C, preferably 50-110°C, and for a residence time of 5-30 minutes, preferably 10-20 minutes, in the presence of carbon dioxide or in the presence of carbon dioxide and water, at a carbon dioxide partial pressure of 5-15 mole %.

8. A method of preparing a composite according to any one of claims 1 to 6, comprising:
■ dissolving ammonia gas in an aqueous solution of sodium chloride; then
■ treating the resulting ammonia brine with carbon dioxide to produce an intermediate composite comprising sodium bicarbonate and an ammonium salt; and then
■ heat treatment of the intermediate composite by heating to a temperature of 20-130°C, preferably 50-110°C, and for a residence time of 5-30 minutes, preferably 10-20 minutes, in the presence of carbon dioxide or in the presence of carbon dioxide and water, at a carbon dioxide partial pressure of 5-15 mole %.

9. Use of a crystalline composite according to any one of claims 1 to 7 for the treatment or depollution of fumes, preferably acid fumes from combustion processes, in particular fumes comprising
■ nitrogen oxides (NOₓ); or
■ nitrogen oxides (NOₓ) and sulphur oxides (SOₓ); or
■ nitrogen oxides (NOₓ) and at least one halogenated acid (HX); or
■ nitrogen oxides (NOₓ), sulphur oxides (SOₓ) and at least one halogenated acid (HX).

10. A method of treating or depolluting a defined fume according to claim 9 comprising bringing said fume into contact with at least one crystalline composite according to any one of claims 1 to 7.

11. The method according to claim 10, wherein
■ the molar ratio of composite to sulphur oxides (SOₓ) is stoichiometric or between 1.02 and 2 times the stoichiometric ratio of the reaction; or
■ the molar ratio of composite to halogenated acid (HX) is stoichiometric or between 1.02 and 2 times the stoichiometric ratio of the reaction; or
■ the molar ratio of composite to sulphur oxides (SOₓ) is stoichiometric and the molar ratio of composite to halogenated acid (HX) is stoichiometric; or
■ the molar ratio of composite to sulphur oxides (SOₓ) is stoichiometric and the molar ratio between the composite and halogenated acid (HX) is between 1.02 and 2 times the stoichiometric ratio of the reaction; or
■ the molar ratio of composite to sulphur oxides (SOₓ) is between 1.02 and 2 times the stoichiometric ratio of the reaction, and the molar ratio of composite to halogenated acid (HX) is between 1.02 and 2 times the stoichiometric ratio of the reaction; or
■ the molar ratio of composite to sulphur oxides (SOₓ) is between 1.02 and 2 times the stoichiometric ratio of the reaction, and the molar ratio of composite to halogenated acid (HX) is stoichiometric.

12. The method according to any one of claims 10 or 11 for the treatment of fume depollution, including a selective catalytic reduction method for nitrogen oxides (NOₓ) at a temperature of 180°C to 380°C or at a temperature of 250 to 380°C or at a temperature of 180 to 250°C.

13. The method according to any one of claims 10 or 11 for the treatment of fume depollution, including a selective non-catalytic reduction method for nitrogen oxides (NOₓ) at a temperature of 850 to 1050°C.

14. A method of treating or depolluting a fume comprising nitrogen oxides (NOₓ), comprising a step of bringing the fume into contact with at least one composite according to any one of claims 1 to 7.
